# EUROPEAN PATENT SPECIFICATION

(11) **EP 2 167 266 B1**
(45) Date of publication and mention of the grant of the patent: **30.03.2011**
(21) Application number: 08776360.3
(22) Date of filing: 15.07.2008
(51) Int. Cl.: B23D 47/04, B27B 5/065

(54) **A PANEL SAW MACHINE**
PLATTENAUFTEILSÄGEMASCHINE
MACHINE A SCIER LES PANNEAUX

(30) Priority: 23.07.2007 IT BO20070509
(43) Date of publication of application: 31.03.2010
(73) Proprietor: Giben International S.P.A., 40065 Pianoro (IT)
(72) Inventor: BENUZZI, Piergiorgio, I-40141 Bologna (IT)
(74) Representative: Lanzoni, Luciano
(86) International application number: PCT/IB2008/001858
(87) International publication number: WO 2009/013583

(56) References cited:
- EP-A- 0 930 120
- WO-A-02/26452
- US-B1- 6 546 834

## Description

### Technical Field

This invention relates to a panel saw machine and, in particular, to a panel saw machine comprising a horizontal work table to support the panels and on which a mobile pusher assembly moves at least one panel.

### Background Art

The work table extends principally in a longitudinal direction Y and the mobile pusher assembly comprises a panel abutment member or fence extending in a direction X substantially perpendicular to the direction Y.

In the specification of this invention, reference is made by way of example to panel saw machines in which the panel abutment fence (which also acts as a pushing element) is driven from below and through the work table; reference is also made to panel saw machines with a single cutting line. **One example of such machine is substantially described in document** US6546834, on which the preamble of claim 1 is based.

Prior art panel saw machines also comprise a cutting unit, for example a revolving blade unit, that moves in X and is designed to saw a panel or stack of panels in the direction X transversal to the direction Y. At the cutting unit, the machine comprises a presser unit which keeps the panels in place while they are being cut.

The pusher moves towards and away from the cutting unit not only to drive the panels over the work table towards the cutting unit but also to define an abutment to stop the panels at a predetermined distance from the cutting line.

The mobile pusher assembly may comprise a plurality of elements (normally referred to as gripper clamps) for picking up and holding the panels and suitably mounted on the abutment element.

The pick-up elements, for example of the clamping type, are designed to grip the stack of panels or the individual panels in such a way that the panels can be moved towards and away from the cutting line.

On the part of the work table on the opposite side of the cutting line, these machines also comprise a plurality of low-friction tables for supporting and receiving the cut panels as they feed out of the cutting line.

The pusher of a panel saw machine of this kind moves along a straight guide usually mounted under the work table.

The guide is fixed, normally fastened to the floor, and extends in the direction Y in a central or middle position relative to the work table or to the cutting line and abutment element itself.

In practice, the mobile pusher assembly whose abutment element extends across the full width of the work table, is guided and supported centrally with respect to the work table itself.

This type of structure has inherent disadvantages.

In the case of front loaded panels, if the panels come into contact with the abutment element in a lateral or offset position, the abutment element tends to swing heavily since it is fixed at the centre only. This is quite a common situation since panel saw machines usually have a lateral contact member or fence for the panels which helps keep the panels in the correct cutting position, and hence the need to align the panels laterally.

The problem is further worsened by the fact that the panels are cut both longitudinally and transversally, the longitudinal cuts being made while the panels are positioned on the side of the work table opposite the fence so as to leave enough room to turn them in order to cut them transversally while keeping them in contact with the lateral fence.

Thus, the abutment beam is stressed alternately on one side and the other of the central guide.

As a result, the abutment element may become slack and lose its precise position relative to the cutting unit, leading to errors in cutting the panels which can only be avoided by adopting large, heavy and hence expensive machine structures.

In another very common constructional form, a pusher carriage extending across the full width of the machine runs on guides positioned on both sides of the work table. This constructional form, though it guarantees high strength and rigidity, involves high production costs and is usually unnecessary for machines in which the panels are loaded from the front.

### Disclosure of the Invention

In this context, the main purpose of this invention is to provide a panel saw machine with a pusher that is free of the above mentioned disadvantages.

The aim of this invention is to provide a panel saw machine that can operate on the panels while keeping them in a substantially centred position relative to the mobile pusher assembly.

Another aim of the invention is to provide a panel saw machine having a simple and relatively inexpensive structure.

Yet another aim of the invention is to provide a panel saw machine that is versatile and easy to assemble.

The stated technical purpose and aims of the invention are substantially achieved by a panel saw machine as described in claim 1 and in one or more of the claims dependent thereon.

### Brief Description of the Drawings

Further characteristics and advantages of the invention are more apparent in the detailed description below, with reference to a preferred, non-limiting, embodiment of a panel saw machine, illustrated in the accompanying drawings in which:
- Figure 1 is a schematic top plan view, with some parts cut away for clarity, of a panel saw machine according to the invention in a first operating configuration;
- Figure 2 is a schematic top plan view, with some parts cut away for clarity, of the machine of Figure 1 in a second operating configuration;
- Figure 3 is a schematic side view, with some parts in blocks and other cut away for clarity, of the machine of Figure 1.

### Detailed Description of the Preferred Embodiments of the Invention

With reference to the accompanying drawings, the numeral 1 denotes in its entirety a panel saw machine according to this invention.

In particular, the panel saw machine 1 referred to in this specification is of substantially known type and therefore not described in detail and has a single sawing axis for cutting whole panels P1, P2 or portions or strips of panels.

The machine 1 comprises a base 2 which extends in a direction X.

At the base 2, the machine 1 comprises a cutting unit 3, for example of the type with a revolving blade, that moves in X along a respective cutting line L to saw the panels P1, P2.

A horizontal work table 4 for supporting the panels and extending principally in a direction Y perpendicular to the direction X is mounted on the base 2, as described below, substantially at the cutting unit 3.

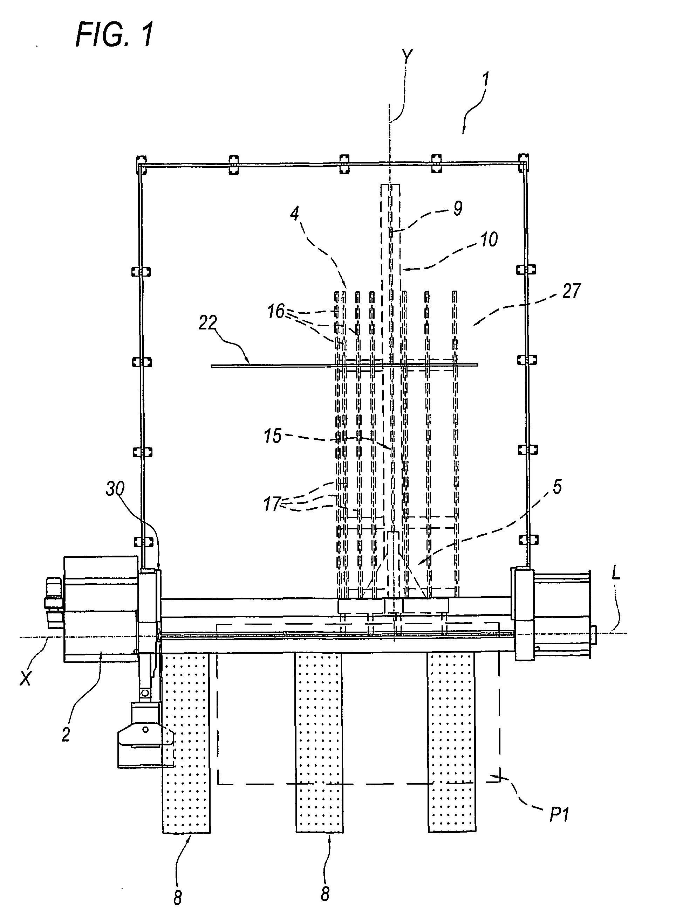

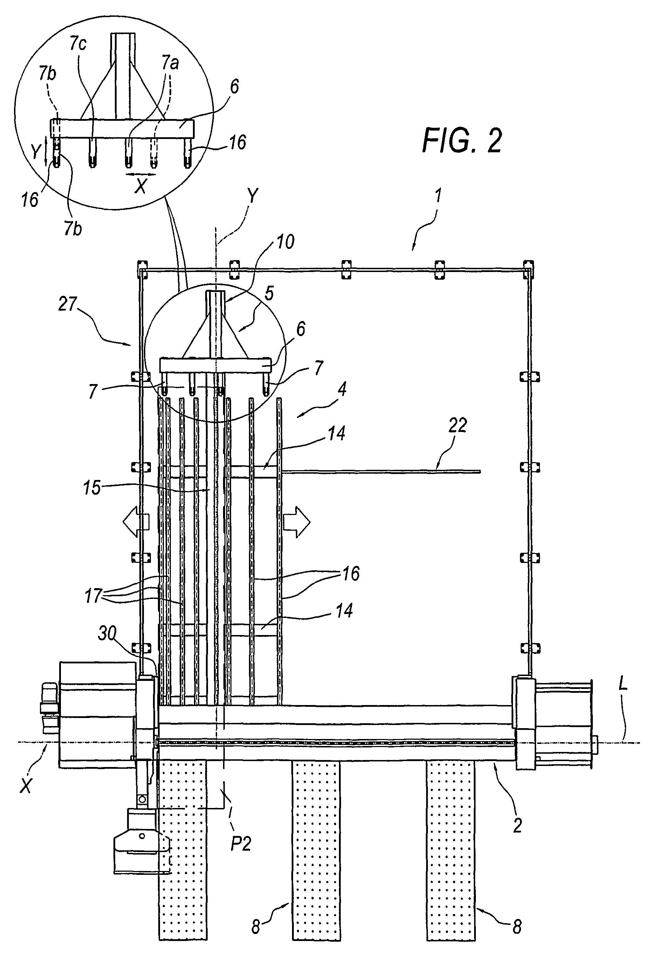

To one side of the work table 4, for example on the left in Figures 1 and 2, the machine 1 comprises a contact element 30, commonly known as "fence", for abutting the panels being processed.

The machine 1 further comprises a mobile pusher assembly 5 for moving and positioning the panels on the table 4.

In particular, the pusher assembly 5 is mobile in Y between a position, indicated by a continuous line, where it is away from the cutting line L, and a position, indicated by a dashed line in Figure 1, where it is close to the cutting line L.

The mobile pusher assembly 5 comprises an element or beam 6 for abutting the panels and extending in the direction X.

The mobile pusher assembly 5 also comprises a plurality of elements 7 for gripping and holding the panels P1, P2 and suitably mounted in known manner on the abutment element 6.

The pick-up elements 7, for example of the clamping type, are designed to grip the stack of panels or the individual panels in such a way that the panels can be moved towards and away from the cutting line L.

As illustrated in Figure 2, the pick-up elements 7 comprise a pick-up element 7a mounted on the beam 6 and mobile along the beam in the direction X between a first operating position and a second operating position illustrated by a dashed line.

Drive means of substantially known type and therefore not described here are associated with the element 7a and move the latter along the beam 6.

As illustrated in Figure 2, the mobile pusher assembly 5 comprises a pick-up element 7b mounted on the beam 6 and mobile between a position, illustrated by a dashed line, where it is close to the beam 6 and a position where it is away from the beam in the direction Y.

Drive means of substantially known type and therefore not described here are associated with the element 7a and move the latter along the beam 6.

Advantageously, the mobility of the pick-up element in X and Y as described above are combined in a single pick-up element 7c which is mobile in both X and Y.

On the part of the work table 4 on the opposite side of the cutting line L, the machine 1 comprises a plurality of low-friction tables 8 for supporting and receiving the cut panels as they feed out of the cutting line L.

The machine 1 comprises a guide 9 along which the pusher assembly 5 moves; the pusher assembly 5 is driven by substantially known drive means, not illustrated, such as a rack, a lead screw, a transmission belt or a transmission cord or cable.

The guide 9 extends in the direction Y and is located along a beam 10 and secured to the base 2.

The mobile pusher assembly 5 comprises a main body 11 slidably connected to the guide 9 that mounts the panel abutment beam 6.

The machine 1 comprises one or more work table 4 brackets 12 attached to the beam 10.

Each bracket 12 has an upright member 13 associated with the beam 10 and a horizontal arm 14 that supports the table 4.

It is important to note that the work table 4 has a longitudinal opening 15 to allow the mobile pusher assembly 5 to move towards and away from the cutting line L.

Preferably, the work table 4 is composed of a plurality of separate longitudinal members 16 supported by the arms 14 and fitted with low-friction running elements 17 such as wheels.

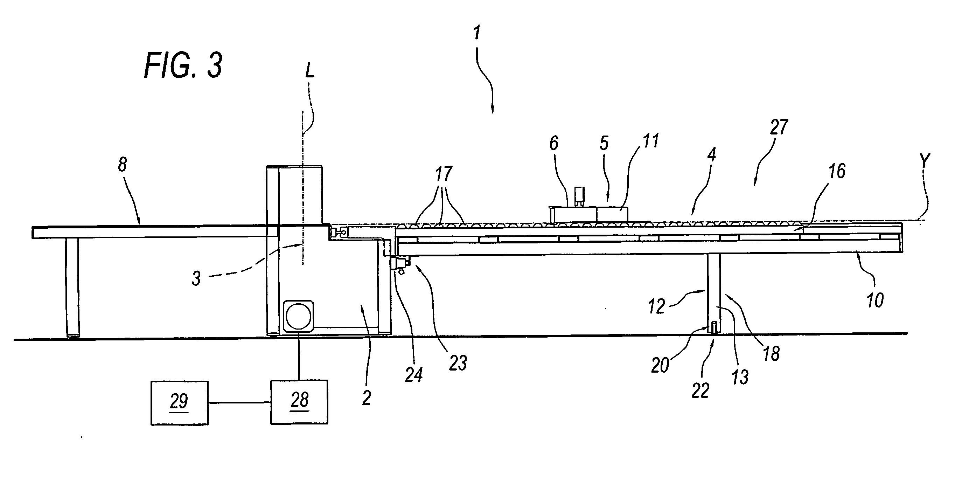

Figure 3 in particular shows how the beam 10 is mounted on a supporting leg 18.

The leg 18 is provided with at least one wheel 20 that enables it to be moved so that the beam 10, the mobile pusher assembly 5 and the work table 4 can be moved in the direction X.

Preferably, the machine 1 comprises a guide 22 for the wheels 20 of the leg 18; it should be noticed that the guide 22 advantageously extends in the direction X.

Advantageously, one end 23 of the beam 10 is slidably connected to a respective guide 24 located in the base 2 and extending in the direction X.

In this way, the beam 10 is supported by the leg 18 and at the guide 24.

The beam 10, the supporting leg 18, the mobile pusher assembly 5, the work table 4 and its brackets 12 together form a mobile structure 27.

More specifically, the structure 27 is mobile between a first operating position, illustrated by a dashed line in Figure 1, and a second operating position away from the first position in X, illustrated in Figure 2.

By way of example, Figure 1 shows the panel P1 while it is being cut longitudinally, whilst Figure 2 shows the panel P2 being cut transversally.

Preferably, at the first operating position, the structure 27 is located on the right, looking at Figure 1, away from the abutment element 30, whilst in the second operating position, it is in abutment against said element.

Preferably, the machine 1 comprises means for driving the structure 27 in the direction X, schematically illustrated as a block 28 and not described in detail.

The drive means 28 are controlled by a computerized control unit 29 which coordinates the movements of the structure 27.

Thus, the mobility of the structure 27 is suitably controlled and programmable through a succession of intermediate positions between the first and the second positions.

The invention, as described above, has important advantages.

The mobile structure enables the panels to be positioned substantially centrally every time relative to the mobile pusher assembly.

When the panels have to be moved from one side of the machine to the other for further cutting, the pusher assembly can be moved accordingly so that the relative position remains optimal.

The mobile structure is relatively simple and easy to produce on industrial scale.

The characteristics as described above make the machine ideal for small, compact and cost-effective installations.

Compactness also means that the structure 27 can be shipped in assembled condition, thus greatly facilitating installation on the end user's premises, which in turn means lower commissioning costs for the panel saw machine.

It will be understood that the invention can be modified and adapted in several ways without thereby departing from the scope of the claims.

## Claims

1. A panel saw machine for cutting panels (P1, P2) comprising a work table (4) for supporting the panels (P1, P2);
a cutting unit (3) that moves along a respective cutting line (L) on the work table (4) to divide the panels into two or more sub-panels;
a pusher assembly (5) that moves towards and away from the cutting line (L) in a direction (Y) transversal to the cutting line (L) to position at least one panel (P1, P2) on the work table (4) at the cutting unit (3), the pusher assembly comprising a beam (6) for abutting the panels (P 1, P2) extending in a direction (X) parallel to the cutting line (L) **and at least one pick-up element (7) mounted on the abutment beam (6) for gripping the panels (P1, P2) and moving them on the work table (4)**;
the machine being **characterized in that** the pusher assembly (5) including the beam (6), is mobile, to adjust its position, in said direction (X) parallel to the cutting line (L) between a first operating position and a second operating position.

2. The machine according to claim 1, **characterized in that** the work table (4) is mobile in the direction (X) parallel to the cutting line (L) and parallel to the mobile pusher assembly (5).

3. The machine according to claim 1 or 2, **characterized in that** the mobile pusher assembly (5) can move towards and away from the cutting line (L) on a respective guide (9), the guide (9) being mobile in the direction (X) parallel to the cutting line (L).

4. The machine according to claim 3, **characterized in that** the work table (4) is associated with and supported by the guide (9), in order that the work table (4) is mobile together with the guide (9).

5. The machine according to claim 3 or 4, **characterized in that** it comprises a base (2) extending along the cutting line (L), the guide (9) being slidably secured to the base (2) and mobile in said direction (X) parallel to the cutting line (L).

6. The machine according to claim 5, **characterized in that** the work table (4) is slidably connected to the base (2) through the guide (9), the work table (4) being mobile along the base (2) in said direction (X) parallel to the cutting line (L).

7. The machine according to claim 3, **characterized in that** it comprises at least one leg (18) for supporting the guide (9) on the floor, the leg (18) being provided with low-friction running means (20) enabling the leg (18) to be mobile in said direction (X) parallel to the cutting line (L).

8. The machine according to claim 7, **characterized in that** it comprises a guide (22) for the low-friction running means (20), said guide (22) extending in the direction (X) parallel to the cutting line (L).

9. The machine according to claim 1, **characterized in that** the mobile pusher assembly (5), the work table (4) and a guide (9) for the mobile pusher assembly, on which the mobile pusher assembly (5) can move towards and away from the cutting line (L), together form a structure (27) that moves in a direction (X) parallel to the cutting line (L).

10. The machine according to claim 9, **characterized in that** it comprises a base (2), the structure (27) being slidably secured to the base (2).

11. The machine according to claim 2, **characterized in that** the work table (4) can move, together with the mobile pusher assembly (5), in the direction (X) parallel to the cutting line (L).

12. The machine according to any of the claims from 1 to 11, **characterized in that said** pick-up element (7a, 7c) **is** driven by respective drive means along the beam, in particular in the direction (X) parallel to the cutting line (L).

13. The machine according to any of the claims from 1 to **12**, **characterized in that** the pick-up element (7b, 7c) moves between a position where it is close to the abutment beam (6) and a position where it is away from the beam, in particular in the direction (Y) transversal to the cutting line (L).

## Patentansprüche

1. Plattenaufteilsägemaschine zum Schneiden von Platten (P1, P2), umfassend
einen Arbeitstisch (4) zum Tragen der Platten (P1, P2); eine Schneideeinheit (3), die sich entlang einer entsprechenden Schneidlinie (L) auf dem Arbeitstisch (4) bewegt, um die Platten in zwei oder mehr Teilplatten zu teilen;
eine Schubanordnung (5), die sich in einer Richtung (Y) auf die Schneidlinie (L) zu und davon wegbewegt, die transversal zur Schneidlinie (L) ist, um mindestens eine Platte (P1, P2) auf dem Arbeitstisch (4) bei der Schneideeinheit (3) zu positionieren, wobei die Schubanordnung einen Balken (6) zur Anlage an den Platten (P1, P2) umfasst, der sich in einer Richtung (X) erstreckt, die parallel zur Schneidlinie (L) ist sowie mindestens ein Aufnahmeelement (7), das auf dem Anlagebalken (6) befestigt ist, um die Platten (P1, P2) zu greifen und sie zum Arbeitstisch (4) zu bewegen; wobei die Maschine **dadurch gekennzeichnet ist, dass** die Schubanordnung (5) einschließlich des Balkens (6) zum Anpassen ihrer Stellung in die Richtung (X), die parallel zur Schneidlinie (L) ist, zwischen einer ersten Arbeitsstellung und einer zweiten Arbeitsstellung beweglich ist.

2. Maschine nach Anspruch 1, **dadurch gekennzeichnet, dass** der Arbeitstisch (4) in die Richtung (X), die parallel zur Schneidlinie (L) und parallel zur beweglichen Schubanordnung (5) ist, beweglich ist.

3. Maschine nach Anspruch 1 oder 2, **dadurch gekennzeichnet, dass** die bewegliche Schubanordnung (5) auf einer entsprechenden Führung (9) auf die Schneidlinie (L) zu und davon wegbewegt werden kann, wobei die Führung (9) in die Richtung (X), die parallel zur Schneidlinie (L) ist, beweglich ist.

4. Maschine nach Anspruch 3, **dadurch gekennzeichnet, dass** der Arbeitstisch (4) mit der Führung (9) verbunden und von ihr getragen wird, damit der Arbeitstisch (4) gemeinsam mit der Führung (9) beweglich ist.

5. Maschine nach Anspruch 3 oder 4, **dadurch gekennzeichnet, dass** sie eine Basis (2) umfasst, die sich entlang der Schneidlinie (L) erstreckt, wobei die Führung (9) an der Basis (2) verschiebbar fixiert und in die Richtung (X), die parallel zur Schneidlinie (L) ist, beweglich ist.

6. Maschine nach Anspruch 5, **dadurch gekennzeichnet, dass** der Arbeitstisch (4) durch die Führung (9) verschiebbar mit der Basis (2) verbunden ist, wobei der Arbeitstisch (4) entlang der Basis (2) in die Richtung (X), die parallel zur Schneidlinie (L) ist, beweglich ist.

7. Maschine nach Anspruch 3, **dadurch gekennzeichnet, dass** sie mindestens ein Bein (18) zum Tragen der Führung (9) auf dem Boden umfasst, wobei das Bein (18) mit reibungsarmen Laufmitteln (20) ausgestattet ist, mit denen das Bein (18) in die Richtung (X), die parallel zur Schneidlinie (L) ist, beweglich ist.

8. Maschine nach Anspruch 7, **dadurch gekennzeichnet, dass** sie eine Führung (22) für die reibungsarmen Laufmittel (20) umfasst, wobei sich die Führung (22) in die Richtung (X) erstreckt, die parallel zur Schneidlinie (L) ist.

9. Maschine nach Anspruch 1, **dadurch gekennzeichnet, dass** die bewegliche Schubanordnung (5), der Arbeitstisch (4) und eine Führung (9) für die bewegliche Schubanordnung, auf der sich die bewegliche Schubanordnung (5) auf die Schneidlinie (L) zu und davon wegbewegen kann, gemeinsam eine Struktur (27) bilden, die sich in die Richtung (X) bewegt, die parallel zur Schneidlinie (L) ist.

10. Maschine nach Anspruch 9, **dadurch gekennzeichnet, dass** sie eine Basis (2) umfasst, wobei die Struktur (27) verschiebbar an der Basis (2) fixiert ist.

11. Maschine nach Anspruch 2, **dadurch gekennzeichnet, dass** sich der Arbeitstisch (4) gemeinsam mit der beweglichen Schubanordnung (5) in die Richtung (X) bewegen kann, die parallel zur Schneidlinie (L) ist.

12. Maschine nach einem der Ansprüche 1 bis 11, **dadurch gekennzeichnet, dass** das Aufnahmeelement (7a, 7c) mit entsprechenden Antriebsmitteln entlang dem Balken (6) angetrieben wird, insbesondere in die Richtung (X), die parallel zur Schneidlinie (L) ist.

13. Maschine nach einem der Ansprüche 1 bis 12, **dadurch gekennzeichnet, dass** sich das Aufnahmeelement (7b, 7c) zwischen einer Stellung, in der es nahe dem Anlagebalken (6) ist und einer Stellung, in der es vom Balken entfernt ist, bewegt, insbesondere in der Richtung (Y), die transversal zur Schneidlinie (L) ist.

## Revendications

1. Machine à scier les panneaux pour la découpe des panneaux (P1, P2) comprenant
un établi (4) pour soutenir les panneaux (P1, P2) ;
une unité de coupe (3) qui se déplace le long d'une ligne de coupe respective (L) sur l'établi (4) pour diviser les panneaux en deux ou plusieurs sous-panneaux ;
un bloc poussoir (5) qui se rapproche et s'éloigne de la ligne de coupe (L) dans une direction (Y) transversale à la ligne de coupe (L) pour positionner au moins un panneau (P1, P2) sur l'établi (4) au niveau du bloc de coupe (3), le bloc poussoir comprenant une poutre (6) qui stoppe les panneaux (P1, P2) se développant dans une direction (X) parallèle à la ligne de coupe (L) et, au moins, un élément de préhension (7) monté sur la poutre de butée (6) pour prendre les panneaux (P1, P2) et les déplacer sur l'établi (4) ;
la machine **se caractérisant en ce que** le bloc poussoir (5) comprenant la poutre (6) est mobile pour régler sa position, dans ladite direction (X) parallèle à la ligne de coupe (L) entre une première position de fonctionnement et une deuxième position de fonctionnement.

2. Machine selon la revendication 1, **caractérisée en ce que** l'établi (4) est mobile dans la direction (X) parallèle à la ligne de coupe (L) et parallèle au bloc poussoir mobile (5).

3. Machine selon les revendications 1 ou 2, **caractérisée en ce que** le bloc poussoir mobile (5) peut se rapprocher et s'éloigner de la ligne de coupe (L) sur une coulisse respective (9), la coulisse (9) étant mobile dans la direction (X) parallèle à la ligne de coupe (L).

4. Machine selon la revendication 3, **caractérisée en ce que** l'établi (4) s'assortit de la coulisse et s'appuie sur celle-ci, de sorte que l'établi (4) se déplace en même temps que la coulisse (9).

5. Machine selon les revendications 3 ou 4, **caractérisée en ce qu'**elle comprend une embase (2) se développant sur la ligne de coupe (L), la coulisse (9) étant fixée de façon coulissante à l'embase (2) et mobile dans ladite direction (X) parallèle à la ligne de coupe (L).

6. Machine selon la revendication 5, **caractérisée en ce que** l'établi (4) est raccordé de façon coulissante à l'embase (2) par la coulisse (9), l'établi (4) étant mobile le long de l'embase (2) dans ladite direction (X) parallèle à la ligne de coupe (L).

7. Machine selon la revendication 3, **caractérisée en ce qu'**elle comprend au moins une jambe (18) pour soutenir la coulisse (9) sur le sol, la jambe (18) étant équipée de moyens de coulissement à frottement réduit (20) pour rendre la jambe (18) mobile dans ladite direction (X) parallèle à la ligne de coupe (L).

8. Machine selon la revendication 7, **caractérisée en ce qu'**elle comprend une coulisse (22) pour les moyens de coulissement à frottement réduit (20), ladite coulisse (22) se développant dans la direction (X) parallèle à la ligne de coupe (L).

9. Machine selon la revendication 1, **caractérisée en ce que** le bloc poussoir mobile (5), l'établi (4) et une coulisse (9) pour le bloc poussoir mobile, sur laquelle le bloc poussoir mobile (5) peut se rapprocher et s'éloigner de la ligne de coupe (L), forment ensemble une structure (27) qui se déplace dans une direction (X) parallèle à la ligne de coupe (L).

10. Machine selon la revendication 9, **caractérisée en ce qu'**elle comprend une embase (2), la structure (27) étant fixée de façon coulissante à l'embase (2).

11. Machine selon la revendication 2, **caractérisée en ce que** l'établi (4) peut se déplacer, avec le bloc poussoir mobile (5), dans la direction (X) parallèle à la ligne de coupe (L).

12. Machine selon l'une quelconque des revendications 1 à 11, **caractérisée en ce que** l'élément de préhension (7a, 7c) est entraîné par des moyens d'entraînement respectifs le long de la poutre, en particulier dans la direction (X) parallèle à la ligne de coupe (L).

13. Machine selon l'une quelconque des revendications 1 à 12, **caractérisée en ce que** l'élément de préhension (7b, 7c) se déplace entre une position où il se rapproche de la poutre de butée (6), et une position où il s'éloigne de la poutre, en particulier dans la direction (Y) transversale à la ligne de coupe (L).
